# DEMANDE DE BREVET EUROPEEN

(11) **EP 1 029 766 A1**
(43) Date de publication de la demande: **23.08.2000**
(21) Numéro de dépôt: 00400423.0
(22) Date de dépôt: 15.02.2000
(51) Int. Cl.: B62B 3/14

(54) **Chariot emboîtable notamment adapté à reçevoir des objets volumineux**

(30) Priorité: 18.02.1999 FR 9902006
(71) Demandeur: ATELIERS REUNIS CADDIE, 67301 Schiltigheim Cedex (FR)
(72) Inventeur: Joseph, Alice, 67301 Schiltigheim Cedex (FR); Le Marchand, Alain, 67116 Reichstett (FR); Bailly, Daniel, 67150 Matzenheim (FR)
(74) Mandataire: CABINET BONNET-THIRION

(57) **Abrégé**

Chariot emboîtable de constitution simple et robuste, notamment adapté à recevoir des objets volumineux, comportant un châssis (10) constitué de deux montants (11,12) latéraux et d'un socle (13), une poignée de préhension (14) montée à l'extrémité supérieure des montants (11,12), au moins une roue avant (27) et deux roues arrière (28), lesdites roues (27,28) étant portées par le châssis (10) : le socle (13) est réalisé d'une seule pièce à partir d'un tube plié en U dont les ailes sont cintrées, les extrémités libres (21, 22) des ailes du U s'étendant dans des plans parallèles à ceux dans lesquels s'étendent les montants (11, 12) en étant placés entre ceux-ci contre lesquels ils sont en appui.

## Description

La présente invention concerne un chariot emboîtable du genre de ceux mis à disposition de la clientèle dans les grandes surfaces pour transporter ses achats.

Un tel chariot comporte généralement un châssis constitué de deux montants latéraux et d'un socle, une poignée de préhension montée à l'extrémité supérieure des montants, au moins une roue avant et deux roues arrière, lesdites roues étant portées par le châssis.

L'invention a pour but de proposer un tel chariot qui soit de constitution simple, donc de fabrication peu onéreuse, tout en étant robuste.

Selon l'invention, un chariot du genre ci-dessus est caractérisé par le fait que le socle est réalisé d'une seule pièce à partir d'un tube plié en U dont les ailes sont cintrées.

Avantageusement, les extrémités libres des ailes du U s'étendent dans des plans parallèles à ceux dans lesquels s'étendent les montants en étant placés entre ceux-ci contre lesquels ils sont en appui.

De préférence, l'âme du U s'étend parallèlement à la poignée de préhension et est reliée auxdites extrémités libres par successivement des arrondis à concavité dirigée vers l'intérieur et des portions arquées à concavité dirigée vers l'extérieur.

Avantageusement, les ailes du U du socle ont en élévation une forme arquée dont la concavité est dirigée vers le sol.

De préférence, les arrondis supportent une traverse qui elle-même supporte la (ou les) roue(s) avant.

Avantageusement, les roues arrière sont fixées en bout des extrémités libres des ailes du socle.

Avantageusement, les montants sont réalisés chacun à partir d'un tube cintré à grand rayon de courbure dont la concavité est dirigée vers l'arrière du chariot.

Pour l'assemblage du socle et des montants, chaque montant et l'extrémité libre de l'aile correspondante sont en contact en deux zones où ils sont solidarisés.

Avantageusement, le tube à partir duquel est réalisé le socle est un tube méplat à section globalement rectangulaire.

De préférence, également chaque montant est un tube méplat à section globalement rectangulaire.

Avantageusement, la plus grande dimension de la section rectangulaire du tube s'étend parallèlement au plan de symétrie longitudinal que présente le chariot ; ainsi, les zones de solidarisation sont de grande étendue.

Compte tenu de la forme simple et aérée du châssis, il est aisé de doter le chariot de moyens permettant le transport d'objets volumineux, souvent lourds, tels que caisses de boissons ou autres.

Ainsi, avantageusement, le socle porte un cadre-support, par exemple en fil plié en U.

De préférence, le cadre-support est à l'avant du chariot et incliné vers l'avant par rapport au sol.

Avantageusement, le socle porte une plate-forme en fils soudés ; la plate-forme est globalement rectangulaire et présente une barre avant dont les extrémités sont introduites dans les ailes du socle en sorte que la plate-forme est montée à articulation par rapport au socle ; la plate-forme présente une traverse de support, disposée transversalement, dont les extrémités reposent sur les ailes du socle en U.

Avantageusement, la plate-forme comporte un cadre et une grille.

Avantageusement, le cadre est à l'avant de la grille et incliné vers l'avant.

De préférence, la grille est horizontale.

Avantageusement, le chariot porte une corbeille placée entre les montants et solidarisée à ceux-ci ; la corbeille comporte un siège enfant.

Avantageusement, la course d'emboîtement du chariot est limitée ; lorsque le chariot comporte une plate-forme, la course d'emboîtement du chariot est limitée par une butée portée par la barre avant de la plate-forme.

Pour mieux faire comprendre l'objet de l'invention, on va en décrire maintenant, à titre d'exemple, purement illustratif et non limitatif, des modes de réalisation représentés sur les dessins annexés.

Sur ces dessins :
- la figure 1 est une vue en élévation d'un chariot selon l'invention ;
- la figure 2 est une vue selon la flèche II de la figure 1 du chariot sans sa corbeille ;
- la figure 3 représente deux demi-vues selon la flèche III de la figure 1, la demi-vue supérieure montrant le chariot sans sa corbeille et la demi-vue inférieure le chariot avec sa corbeille ;
- la figure 4 illustre l'emboîtement de plusieurs chariots selon l'invention.

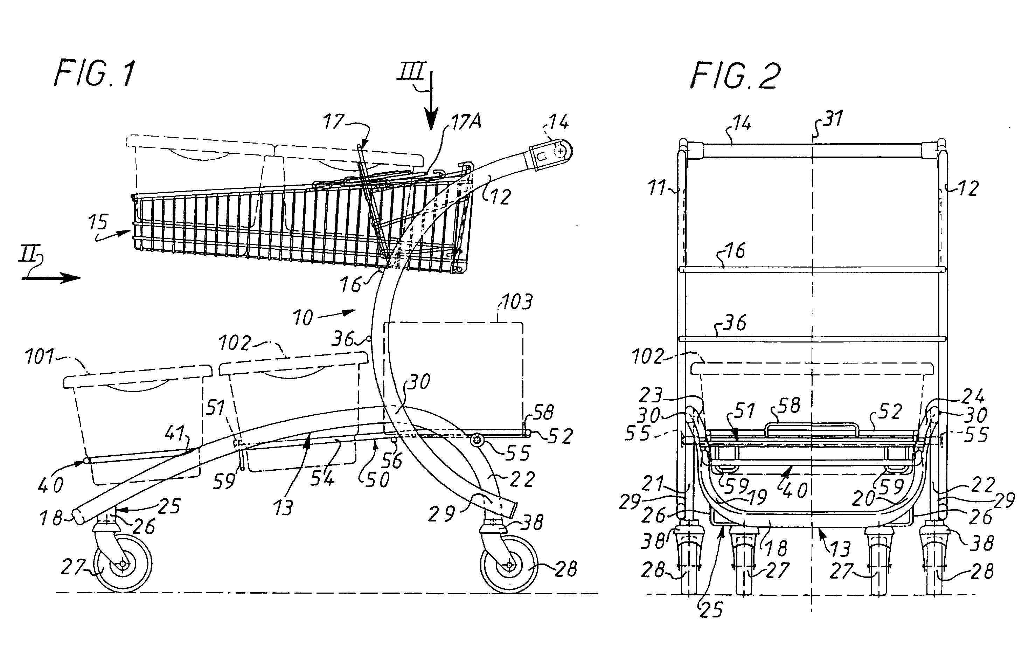

En se reportant aux figures 1 à 3, on voit qu'un chariot selon l'invention comporte un châssis 10 constitué de deux montants 11, 12 latéraux et d'un socle 13.

A leur extrémité supérieure, les montants 11, 12 supportent une poignée de préhension 14 et, sous celle-ci, une corbeille 15 du type classique solidaire par sa partie arrière des montants 11, 12 en étant placée entre ceux-ci et en appui sur une entretoise en fil 16 reliant les deux montants 11, 12 à l'avant de ceux-ci.

La corbeille 15 peut être ou non munie d'un siège enfant ; ici, la corbeille 15 est représentée munie d'un siège enfant 17 rabattable lors de l'emboîtement du chariot avec un autre identique, comme expliqué ci-dessous ; sur la figure 1, on a également représenté sous la référence 17A ledit siège enfant 17 dans la position qu'il occupe lorsqu'il est rabattu après emboîtement d'un chariot dans le chariot de la figure 1.

Selon l'une des caractéristiques de l'invention, le socle 13 est réalisé d'une seule pièce à partir d'un tube plié en U dont les ailes sont cintrées ; plus précisément, le socle 13 est en forme générale de U dont l'âme 18 est parallèle à la poignée de préhension 14 et située à l'avant du chariot ; l'âme 18 est prolongée à ses extrémités par des arrondis 19, 20 dont la concavité est dirigée vers l'intérieur du chariot et qui s'étendent vers la poignée de préhension 14. Les extrémités libres 21, 22 des ailes du U s'étendent dans des plans parallèles à ceux dans lesquels s'étendent les montants 11, 12 en étant placés entre ceux-ci contre lesquels elles sont en appui. Ces extrémités libres 21, 22 se raccordent aux arrondis 19, 20 par des portions arquées 23, 24 légèrement concaves, à concavité dirigée vers l'extérieur du chariot. Les arrondis 19, 20 et les portions arquées 23, 24 sont à une distance mesurée transversalement inférieure à celle qui sépare les extrémités libres 21, 22.

Il résulte de ce qui précède que les ailes du U du socle 13, constituées des arrondis 19 et 20, des portions arquées 23 et 24, et des extrémités libres 21 et 22, respectivement, ont en élévation une forme arquée à concavité globalement dirigée vers le sol, comme cela est visible sur la figure 1.

A l'avant du socle 13, une traverse 25 en fer plat en forme générale de U est fixée par ses ailes 26 aux arrondis 19, 20 du socle 13 et supporte les roues avant 27 du chariot ; les roues arrière 28 sont fixées en bout des extrémités libres 21, 22 des ailes du socle 13.

Les montants 11, 12 sont également réalisés chacun à partir d'un tube cintré, de forme globalement semi-circulaire à grand rayon de courbure et à concavité dirigée vers l'arrière du chariot ; chaque montant 11, 12 est plan et disposé au droit des extrémités libres 21, 22 planes des ailes du socle 13 en sorte de les contacter en deux zones, une zone dite basse 29, figure 1, proche des roues arrière 28, et une zone dite haute 30 qui correspond sensiblement à la partie la plus haute des ailes du socle 13, au droit du raccordement des extrémités libres 21, 22 aux portions arquées 23, 24 respectivement du socle 13.

Avantageusement, les tubes à partir desquels sont formés le socle 13 et les montants 11, 12 sont des tubes méplats, à section globalement rectangulaire dont la grande dimension s'étend parallèlement au plan de symétrie longitudinal 31, figure 2, du chariot ; grâce à cette disposition, la résistance et la tenue mécanique de l'ensemble est excellente, les montants 11, 12 s'étendant par ailleurs d'un seul tenant depuis la poignée de préhension 14 jusqu'au droit des roues arrière 28.

Les zones de superposition 29, 30 des montants 11, 12 et du socle 13, qui permettent l'assemblage par soudage, sont de grande portée et, bien que peu nombreuses, ces zones de soudage confèrent à l'assemblage une excellente robustesse ; un tel chariot est économique : il y a peu de pièces, le socle 13 et chacun des montants étant d'une seule pièce, réalisés à partir de tubes, et les opérations de soudage limitées ; en ce qui concerne ce dernier point, ceci est également valable pour la solidarisation, également par soudage, de la corbeille 15 aux montants 11 et 12, entre ceux-ci.

On profite de l'espace disponible entre le socle 13 et le fond de la corbeille 15 pour équiper le chariot de moyens permettant le transport d'objets volumineux, souvent lourds, tels que caisses de boissons ou autres, sans avoir à les soulever jusque dans la corbeille 15.

Ces moyens sont constitués ici d'un cadre-support 40 et d'une plate-forme 50.

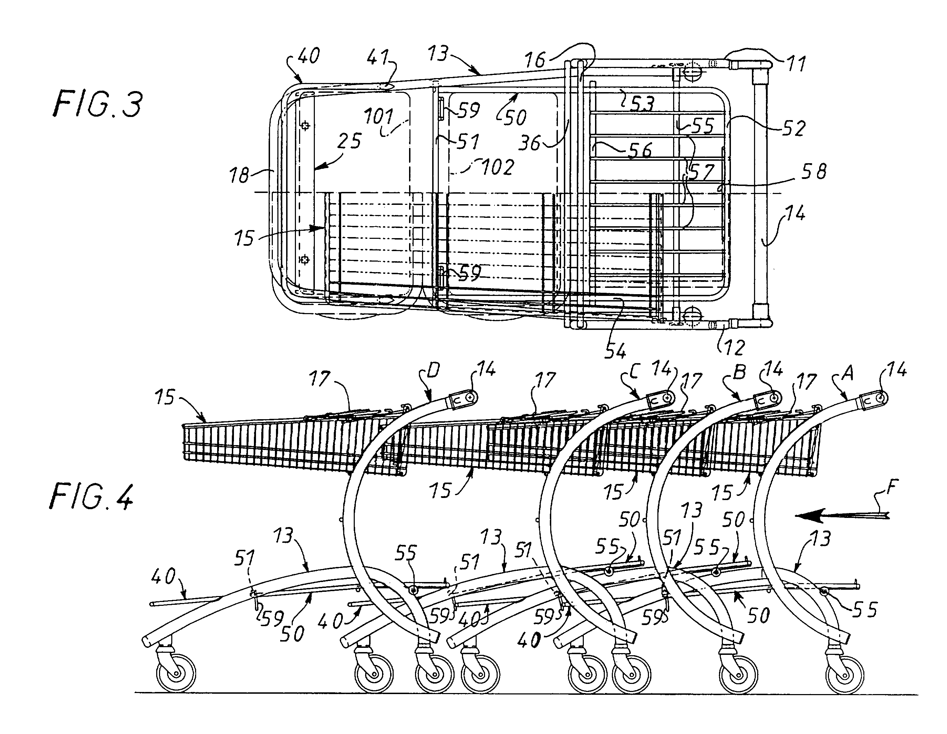

Le cadre-support 40 en fil plié en U est fixé, par soudage de ses extrémités libres 41 et 42, figure 3, à l'avant du socle 13, sur la face supérieure des ailes de celui-ci ; le cadre-support 40 est légèrement incliné vers l'avant et positionné à une distance suffisante des roues avant 27 pour permettre l'emboîtement de chariots identiques.

Un tel cadre-support 40 permet par exemple le transport d'une caisse ou d'un bac, tel que le bac 101 illustré en traits mixtes figures 1 à 3 dont le fond en retrait définit un épaulement tout autour du bac 101 qui repose latéralement sur les ailes latérales du cadre-support 40 dont les dimensions ont été prévues en conséquence.

La plate-forme 50 est en fils soudés et comporte un cadre globalement rectangulaire constitué d'une barre avant 51 et d'une barre arrière 52 reliées par des barres latérales 53, 54 ; ici, les barres arrière 52 et latérales 53, 54 sont d'un seul tenant, réalisées par pliage en U d'un même fil soudé par ses extrémités à la barre avant 51 au voisinage des extrémités de celle-ci qui sont introduites dans les ailes du socle 13 en sorte que la plate-forme 50 est montée articulée par rapport au socle 13 autour d'un axe correspondant à l'axe selon lequel s'étend la barre avant 51.

La plate-forme 50 présente, proche de la barre arrière 52, une traverse 55, dite de support, soudée aux barres latérales 53 et 54, disposée transversalement c'est-à-dire parallèlement aux barres avant 51 et arrière 52, dont la longueur est telle qu'elle repose par ses extrémités sur les ailes du socle 13 en U, plus précisément ici sur les portions arquées 23 et 24 dudit socle 13.

Au voisinage de sa partie médiane, la plate-forme 50 présente une entretoise en fil 56 parallèle aux barres avant 51 et arrière 52 sur laquelle sont soudées les extrémités de fils longitudinaux 57 dont les autres extrémités sont soudées à la barre arrière 52 en sorte qu'est constituée une grille arrière de support pouvant recevoir des objets lourds ou volumineux, par exemple une caisse 103 montrée en traits mixtes sur la figure 1 ; le calage longitudinal de ces objets vers l'arrière est assuré par une butée 58 constituée d'un cavalier vertical en U soudé à la barre arrière 52. Les objets volumineux peuvent être également calés vers l'avant par une entretoise 36 soudée aux montants 11 et 12 dans la zone la plus en avant de ceux-ci, pratiquement à mi-hauteur.

On voit qu'à la partie avant de la plate-forme 50 est constitué un cadre bordé à l'avant par la barre avant 51, à l'arrière par l'entretoise 56 et latéralement par les barres latérales 53 et 54 ; ce cadre peut être utilisé pour supporter un bac 102, figure 1, analogue au bac 101 et dans les mêmes conditions que le cadre support 40.

Ici, le cadre avant de la plate-forme 50 s'étend pratiquement dans le même plan incliné dans lequel s'étend le cadre-support 40, c'est-à-dire donc dans le prolongement de celui-ci, tandis que la grille arrière de la plate-forme 50 s'étend globalement horizontalement, les barres latérales 53 et 54 étant légèrement pliées pour ce faire.

Comme cela résulte de la description ci-dessus, le chariot selon l'invention est robuste, simple, facile à fabriquer et peu onéreux ; par ailleurs, de tels chariots sont emboîtables l'un dans l'autre pour constituer une file de chariots permettant un gain de place au stockage.

L'emboîtement de tels chariots est illustré sur la figure 4.

Sur cette figure sont représentés quatre chariots A, B, C, D, emboîtés ou en cours d'emboîtement ; l'opération d'emboîtement s'effectue dans le sens de la flèche F ; le chariot A en fin de file, le plus à droite sur la figure, est emboîté dans le chariot B, lui-même emboîté dans le chariot C ; la figure illustre l'opération selon laquelle l'ensemble des chariots A, B, C est poussé dans le sens de la flèche F vers le chariot D pour emboîtement de celui-ci.

Comme cela résulte de la description et des figures, lors de l'emboîtement, la partie arrière de la plate-forme 50 est soulevée, la partie avant des ailes arquées du socle 13 en U jouant le rôle de rampes sur lesquelles montent les extrémités de la traverse de support 55, dont la longueur est prévue en conséquence, du chariot à emboîter, laquelle quitte l'appui sur le socle 13 dudit chariot ; lors de cette opération, la plate-forme 50 pivote autour de sa barre avant 51 par laquelle elle est montée à articulation.

Bien entendu, si les socles 13 s'emboîtent, comme on vient de le voir, les corbeilles 15 s'emboîtent également l'une dans l'autre, l'avant d'une corbeille 15 rabattant, lors de l'emboîtement, le siège enfant 17 de la corbeille 15 qui la précède. Pour des raisons de simplification, le siège enfant 17 du chariot D a été représenté rabattu bien que le chariot D ne soit qu'en cours d'emboîtement.

Compte tenu de la forme en tronc de pyramide des corbeilles 15, qui est nécessaire pour leur emboîtement, on préfère, pour éviter tout coïncement, limiter la course d'emboîtement d'un chariot dans l'autre ; pour ce faire, sous la barre avant 51 du chariot, est soudé au moins un étrier 59, ici deux étriers 59, constituant une butée d'emboîtement avec laquelle est amenée à coopérer l'âme du cadre support 40 en U placée à l'avant du chariot voisin.

On notera que, l'encombrement transversal du chariot étant défini par les bords externes des coupelles 38, figure 2, qui supportent les roues arrière 28, cet encombrement est respecté par les montants 11, 12.

On notera également que les ailes arquées du socle 13 en U permettent le calage transversal des objets transportés sur la plate-forme 50.

En variante, le cadre-support 40 est également une grille.

## Revendications

1. Chariot comportant un châssis (10) constitué de deux montants (11,12) latéraux et d'un socle (13), une poignée de préhension (14) montée à l'extrémité supérieure des montants (11,12), au moins une roue avant (27) et deux roues arrière (28), lesdites roues (27,28) étant portées par le châssis (10), caractérisé par le fait que le socle (13) est réalisé d'une seule pièce à partir d'un tube plié en U dont les ailes sont cintrées.

2. Chariot selon la revendication 1, caractérisé par le fait que les extrémités libres (21, 22) des ailes du U s'étendent dans des plans parallèles à ceux dans lesquels s'étendent les montants (11, 12) en étant placés entre ceux-ci contre lesquels ils sont en appui.

3. Chariot selon la revendication 2, caractérisé par le fait que l'âme (18) du U s'étend parallèlement à la poignée de préhension (14) et est reliée auxdites extrémités libres (21,22) par successivement des arrondis (19,20) à concavité dirigée vers l'intérieur et des portions arquées (23,24) à concavité dirigée vers l'extérieur.

4. Chariot selon les revendications 2 et 3 prises conjointement, caractérisé par le fait que les ailes (21,22-23,24-19,20) du U du socle (13) ont en élévation une forme arquée dont la concavité est dirigée vers le sol.

5. Chariot selon l'une des revendications 3 ou 4, caractérisé par le fait que les arrondis (19,20) supportent une traverse (25) qui elle-même supporte la (ou les) roue(s) avant (27).

6. Chariot selon l'une des revendications 2 à 5, caractérisé par le fait que les roues arrière (28) sont fixées en bout des extrémités libres (21,22) des ailes du socle (13).

7. Chariot selon l'une des revendications 1 à 6, caractérisé par le fait que les montants (11,12) sont réalisés chacun à partir d'un tube cintré à grand rayon de courbure dont la concavité est dirigée vers l'arrière du chariot.

8. Chariot selon les revendications 2 et 7 prises conjointement, caractérisé par le fait que chaque montant (11,12) et l'extrémité libre (21,22) de l'aile correspondante sont en contact en deux zones (29,30) où ils sont solidarisés.

9. Chariot selon l'une des revendications 1 à 6, caractérisé par le fait que le tube à partir duquel est réalisé le socle (13) est un tube méplat à section globalement rectangulaire.

10. Chariot selon l'une des revendications 7 ou 8, caractérisé par le fait que chaque montant (11,12) est un tube méplat à section globalement rectangulaire.

11. Chariot selon l'une des revendications 9 ou 10, caractérisé par le fait que la plus grande dimension de la section rectangulaire du tube s'étend parallèlement au plan de symétrie longitudinal (31) que présente le chariot.

12. Chariot selon l'une des revendications 1 à 11, caractérisé par le fait que le socle (13) porte à l'avant un cadre-support (40), par exemple en fil plié en U.

13. Chariot selon la revendication 12, caractérisé par le fait que le cadre-support (40) est à l'avant du chariot et incliné vers l'avant par rapport au sol.

14. Chariot selon l'une des revendications 1 à 13, caractérisé par le fait que le socle (13) porte une plate-forme (50) en fils soudés.

15. Chariot selon la revendication 14, caractérisé par le fait que la plate-forme (50) est globalement rectangulaire et présente une barre avant (51) dont les extrémités sont introduites dans les ailes du socle (13) en sorte que la plate-forme (50) est montée à articulation par rapport au socle (13).

16. Chariot selon la revendication 15, caractérisé par le fait que la plate-forme (50) présente une traverse de support (55), disposée transversalement, dont les extrémités reposent sur les ailes du socle (13) en U.

17. Chariot selon l'une des revendications 14 à 16, caractérisé par le fait que la plate-forme (50) comporte un cadre (51,56,53,54) et une grille (56,57,52).

18. Chariot selon la revendication 17, caractérisé par le fait que le cadre (51,56,53,54) est à l'avant de la grille (56,57,52) et incliné vers l'avant.

19. Chariot selon la revendication 17, caractérisé par le fait que la grille (56,57,52) est horizontale.

20. Chariot selon l'une des revendications 1 à 19, caractérisé par le fait que le chariot porte une corbeille (15) placée entre les montants (11,12) et solidarisée à ceux-ci.

21. Chariot selon la revendication 20, caractérisé par le fait que la corbeille (15) comporte un siège enfant (17).

22. Chariot selon l'une des revendications 1 à 21, caractérisé par le fait que la course d'emboîtement du chariot est limitée.

23. Chariot selon les revendications 15 et 22 prises conjointement, caractérisé par le fait que la course d'emboîtement du chariot est limitée par une butée (59) portée par la barre avant (51) de la plate-forme (50).
